# EUROPÄISCHE PATENTANMELDUNG

(11) **EP 4 219 035 A1**
(43) Veröffentlichungstag der Anmeldung: **02.08.2023**
(21) Anmeldenummer: 23151965.3
(22) Anmeldetag: 17.01.2023
(51) Int. Cl.: B09B 3/40, B29B 17/04, F27B 3/18, F27B 3/22, F27B 3/08, F27D 3/18, C21B 11/10, C21B 13/12, C21C 5/52, B09B 101/75

(54) **VERFAHREN ZUM VERWERTEN VON BAUTEILEN, DIE KOHLENSTOFFFASERVERSTÄRKTEN KUNSTSTOFF (CFK) AUFWEISEN ODER AUS DIESEM BESTEHEN**

(30) Priorität: 26.01.2022 DE 102022101835
(71) Anmelder: RHM Rohstoff-Handelsgesellschaft mbH, 45478 Mühlheim a. d. Ruhr (DE)
(72) Erfinder: Dettmer, Bernd, 49186 Bad Iburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Verwerten von Bauteilen, die kohlenstofffaserverstärkten Kunststoff (CFK) aufweisen oder aus diesem bestehen. Um ein solches Verfahren so auszugestalten, dass eine Verwertung bzw. Vernichtung von CFK-haltigen Materialien bzw. Bauteilen ohne Umwelt- und Gesundheitsrisiken möglich ist und gleichzeitig der Kohlenstoff recycelt wird, sieht die Erfindung vor, dass das Verfahren die Schritte umfasst: a) Zerteilen der Bauteile in Teile (1), insbesondere in geschredderte Partikel; b) Aufschmelzen von Metall (2), insbesondere von unlegiertem Schrott, in einem Lichtbogenofen (3), wobei der Lichtbogenofen (3) mindestens eine als Hohlelektrode (4) ausgebildete Elektrode aufweist, c) Zuführen der Teile (1) der Bauteile durch die mindestens eine Hohlelektrode (4) in den Lichtbogenofen (3), so dass die Teile (1) in die sich im Lichtbogenofen (3) befindliche Schmelze gelangen.

## Beschreibung

Die Erfindung betrifft ein Verfahren zum Verwerten von Bauteilen, die kohlenstofffaserverstärkten Kunststoff (CFK) aufweisen oder aus diesem bestehen.

Der steigende Einsatz von kohlenstofffaserverstärkten (carbonfaserverstärkten) Kunststoffen (sog. CFK) führt auch zu einem Anstieg von carbonfaserhaltigen Abfällen, zunächst aus der Produktion, später auch durch End-of-Life-Konsumabfällen. Gegenwärtig erfolgt die Rückgewinnung von Fasern, sofern sie überhaupt durchgeführt wird, mittels Pyrolyse, wobei bei diesem Recyclingprozess jedoch von einer Verkürzung der Fasern auszugehen ist. Auch wegen der Qualität der Rezyklate und den hohen Kosten für die Werkstoffzertifizierung derselben ist der Einsatz von Recyklat-Fasern aktuell auf wenige sehr sortenreine Faserreste beschränkt. Durch die prozessbedingte Verkürzung von einzelnen Fasern und mangelhafter Qualität des daraus entstehenden Recyclingmaterials, entstehen immer carbonfaserhaltige Reststoffe, die ökonomisch nicht recyklierbar sind.

Bei der Herstellung von Produkten mit CFK ist der Anteil der entstehenden Abfallmengen vom Herstellungsverfahren und dem gewünschten Endprodukt abhängig. Übliche Mengen in der Bauteilherstellung sind für Faserabfall bis zu 20 Gew.-%, bei Faserhalbzeugabfall bis zu 40 Gew.-% und bei Fasermatrixhalbzeugen bis zu 10 Gew.-%.

Derzeit ist die Erfassung und die Sortierung von CFK nicht etabliert. Es gibt derzeit noch keine Abfallschlüsselnummern, so dass keine Mengenströme nachvollziehbar vorhanden sind. Die Länderarbeitsgemeinschaft Abfall ist dabei, mehrere separate Abfallschlüssel für kohlenstofffaserhaltige Abfälle sowohl aus Produktion als auch für das End-of-Life vorzuschlagen.

Die Abfallhierarchie des Kreislaufwirtschaftsgesetzes regelt die Rangfolge, nach der die Entsorgung von Abfällen grundsätzlich zu erfolgen hat. Nach Vermeidung und Wiederverwendung ist das Recycling die ranghöchste Stufe der Entsorgung. Für die Verwertung dieser nicht recyklierbaren carbonfaserhaltigen Reststoffe sind weiterührende (thermische) Verfahren notwendig. Aktuelle Untersuchungen für das Umweltbundesamt zeigen, dass die Bedingungen bestehender Verwertungspfade, wie Siedlungs- und Gewerbeabfälle bis hin zu Müllverbrennungsanlagen sowie Sonderabfall-verbrennungsanlagen, für eine Verwertung dieser Abfälle nicht geeignet sind, da die Prozessbedingungen (Temperatur, Atmosphäre, Verweilzeit) keine vollständige Umsetzung der Fasern ermöglichen. Dies kann in den Anlagen technische Probleme bis hin zum Anlagenstillstand verursachen. Die kohlenstoffhaltigen Fasern erzeugen Kurzschlüsse und Übertemperaturen in den Elektrofiltern der Anlagen. Es findet ein unkontrollierter Eintrag statt, weil die Fasern nicht zu detektieren sind.

Sofern eine thermische Behandlung von CFK-Bauteilen beim Recycling in Betracht zu ziehen ist, stellen sich hier spezielle Probleme: Bei einer unvollständigen Umsetzung, sei es auch nur im Falle einer Produktionsstörung, werden lungengängige Fasern frei, ähnlich dem Asbest, die die WHO-Kriterien zur Lungengängigkeit erfüllen (Länge > 5 µm; Durchmesser < 3 µm; Verhältnis Länge/Durchmesser > 3:1; sog. WHO-Fasern). Da in den technischen Regelwerken (TRGS) der korrekte Umgang mit CFK-Werkstoffen noch nicht abschließend geklärt ist, ergingen schon für erste kleine Versuche Hinweise zur Minimierung arbeitsschutztechnischer Risiken. Der Einsatz in laufenden Produktionsanlagen ist damit ausgeschlossen.

Die EP 0 721 990 A1 beschreibt ein Verfahren zum Herstellen von legierten Stählen, wobei ins Innere eines Elektroofens Material über eine Hohlelektrode eingebracht wird. Ein Hinweis auf die Verwertung von CFK-haltigen Materialien findet sich hier nicht. Die JP 2017 075 380 A beschreibt ein Verfahren zur Behandlung von Kohlefasern, welches in Flüssigeisen eingegeben wird. Eine spezielle Technik für die Eingabe des Fasermaterials in einen Konverter wird nicht offenbart. Die DE 10 2017 212 583 A1 beschreibt Pellets als Zuschlagstoff für metallurgische Prozesse. Zur Verwertung von Kohlenstofffasern finden sich in der DE 10 2021 114 676 A1 allgemeine verfahrenstechnische Hinweise.

Der Erfindung liegt daher die **Aufgabe** zugrunde, ein Verfahren der eingangs genannten Art so auszugestalten, dass eine Verwertung bzw. Vernichtung von CFK-haltigen Materialien bzw. Bauteilen ohne Umwelt- und Gesundheitsrisiken möglich ist und gleichzeitig der Kohlenstoff recycelt wird. Damit soll erreicht werden, dass eine Deponierung besagter Materialien hinfällig wird, die besondere Probleme verursacht.

Die **Lösung** dieser Aufgabe durch die Erfindung ist dadurch gekennzeichnet, dass das Verfahren die Schritte umfasst:
a) Zerteilen der Bauteile in Teile, insbesondere in geschredderte Partikel;
b) Aufschmelzen von Metall, insbesondere von unlegiertem Schrott, in einem Lichtbogenofen, wobei der Lichtbogenofen mindestens eine als Hohlelektrode ausgebildete Elektrode aufweist;
c) Zuführen der Teile der Bauteile durch die mindestens eine Hohlelektrode in den Lichtbogenofen, so dass die Teile in die sich im Lichtbogenofen befindliche Schmelze gelangen.

Wenn hier von "Bauteilen" gesprochen wird, sind im Sinne der obigen Erläuterungen hierunter natürlich alle Arten von Teilen zu verstehen, die CFK aufweisen oder aus diesem Material bestehen. Hierunter sind insbesondere Produktionsabfälle zu verstehen, aber auch Bauteile, die am Ende ihres Lebenszyklus zu entsorgen sind.

Das Zerteilen der Bauteile in Teile gemäß obigem Schritt a) und/oder das Zuführen der Teile der Bauteile durch die Hohlelektrode gemäß obigem Schritt c) erfolgt bevorzugt unter hermetischem Abschluss zur Umgebung. Damit wird das Austreten von Kohlenstofffasern verhindert.

Das Zuführen der Teile der Bauteile durch die Hohlelektrode gemäß obigem Schritt c) erfolgt bevorzugt unter Einsatz eines Trägergases, welches durch die Hohlelektrode geleitet wird.

Die Hohlelektrode besteht bevorzugt aus Graphit.

Das Metall, welches gemäß obigem Schritt b) aufgeschmolzen wird, ist bevorzugt Schrott, welcher zu Beginn des Verfahrens oder beim Einbringen in den Lichtbogenofen einen maximalen Kohlenstoffanteil von 0,2 %, aufweist. Dabei ist das Metall bevorzugt gescherter Besäumschrott aus der Coilproduktion. Die genannten Angaben beziehen sich insbesondere auf den erstmaligen Start des Verfahrens. Bei nachfolgenden Chargen kann der Start-Kohlenstoffgehalt in Abhängigkeit der im Ofen verbliebenen Menge an Restschmelze der Vorcharge variieren.

Als Lichtbogenofen kommt bevorzugt ein Gleichstromlichtbogenofen mit einer einzigen Hohlelektrode zum Einsatz.

Bevorzugt wird mit dem Zuführen der Teile der Bauteile durch die mindestens eine Hohlelektrode begonnen, sobald die Schmelze im Lichtbogenofen eine Temperatur zwischen 1.470 °C und 1.530 °C hat.

Das Zuführen der Teile der Bauteile durch die mindestens eine Hohlelektrode und der Energieeintrag in den Lichtbogenofen erfolgen bevorzugt so, dass im stationären Zustand die Schmelze eine Temperatur zwischen 1.300 °C und 1.500 °C hat.

Das Verfahren wird vorzugsweise dann beendet und das so erzeugte Recycling-Roheisen aus dem Lichtbogenofen zumindest teilweise entnommen, sobald der Kohlenstoffgehalt in der Schmelze zwischen 2,5 % und 4,0 %, vorzugsweise zwischen 3,0 % und 3,5 %, beträgt.

Bevorzugt wird nach der Entnahme des erzeugten Recycling-Roheisens aus dem Lichtbogenofen dieses zu Masseln verarbeitet.

Mit dem vorgeschlagenen Verfahren kann somit die Erzeugung von Recycling-Roheisen durch Einblasen von geschredderten CFK-Partikeln durch die Hohlelektrode erfolgen. Die ansonsten nur schwer zu entsorgenden CFK-Fasern können so zur Roheisenherstellung genutzt werden, ohne eine Umweltbelastung darzustellen. Der Kohlenstoff der Fasern in den Teilen des Bauteils ersetzt dabei fossilen Kohlenstoff, der ansonsten bei der Roheisenerzeugung eingesetzt wird.

Gemäß dem vorgeschlagenen Verfahren wird bevorzugt ein CO₂-neutrales Recyclingroheisen mit bis zu 3,50 % Kohlenstoff erzeugt, wobei eine Nutzung der Fasern vorgesehen ist. Dabei wird das CFK-haltige Bauteil vorzugsweise in einem gekapselten Prozess (ggf. mit Absaugung) geschreddert. Anschließend kann es durch die Hohlelektrode in einen auf einer Metallschmelze brennenden elektrischen-/gasförmigen-/Plasma-Lichtbogen gefördert werden. Durch Temperaturen von über 3.000 °C im Brennfleck und ca. 1.500 °C der Schmelze, sowie durch eine sehr gute Kinetik der Reaktionspartner ist das Aufkohlen der Schmelze gewährleistet; die günstige Kinetik ergibt sich, weil die Reaktionspartner feines Material und Schmelze durch das Einblasen direkt reagieren können. Gegebenenfalls vorhandene Harze gehen in die Schlacke oder in das faserfreie Abgas über. Somit ist eine rückstandsfreie Nutzung von geschreddertem CFK-Material möglich, wobei die Erzeugung von CO₂-freiem Recyclingroheisen gelingt.

Das vorbereitende Schreddern ist als solches bekannt. Im Zusammenhang mit dem vorgeschlagenen Verfahren ist es wichtig, dass alle entstehenden Staubpartikel möglichst so im System verbleiben, dass sie mit in das Einblasmaterial gelangen und verwertet werden. Das geschredderte Material wird bevorzugt über ein staubdichtes Einblassystem einer oder mehrerer Hohlelektroden zugeführt. Diese bestehen bevorzugt aus Graphit; auch der Einsatz einer sog. Söderberg-Elektrode ist möglich (selbstbrennende, elektrische Dauerelektrode mit entsprechender Materialdurchführung).

Für diesen Transportvorgang eignen sich verschiedene Gase.

Die (Start-)Schmelze wird bevorzugt aus unlegiertem Schrott erschmolzen, der wenig Kohlenstoff enthält; dabei ist der bevorzugte Kohlenstoffgehalt ca. 0,2 %. Solcher Schrott ist in größeren Mengen als gescherter Besäumschrott der Coilproduktion für Automobilblech aus Kaltwalzwerken vorhanden (sogenannter Schnibbelschrott). Dieses Material ist insbesondere Feinblech für PKW-Karosserien. Bei den nachfolgenden Schmelzen variiert der Start-Kohlenstoffgehalt bei Beginn des Einblasvorgangs der Teile der Bauteile mit den Kohlenstofffasern in Abhängigkeit der Menge an Restschmelze der vorher erzeugten Charge, die noch im Ofen verblieben ist.

Als Schmelzaggregat wird bevorzugt ein Gleichstromlichtbogenofen mit einer Hohlelektrode eingesetzt. Aber auch Wechselstromöfen mit drei Elektroden, wovon mindestens eine hohl sein muss, sind möglich.

Im Ofen erfolgt der Schmelzprozess mit ausreichender Temperatur sowie ausreichender Zeit, um das Faser-Material chemisch in die Schmelze zu integrieren. Da die Fasern aus Kohlenstoff bestehen, kann der aufgeschmolzene vorzugsweise kohlenstoffarme Schrott den Kohlenstoff der Faser bis zu seiner Sättigung aufnehmen. Demgemäß wird durch den Einsatz der Kohlenstofffasern aus den Teilen eine Substitution von primären Kohlenstoffträgern möglich. Durch die beschriebene Vorgehensweise entfällt jedoch vorteilhaft jegliche gesundheitliche Gefährdung durch die Fasern.

Dabei kann die Freisetzung feiner Fasern praktisch vollständig vermieden werden. Gleichzeitig kann der Kohlenstoff des zu verwertenden Materials vorteilhaft eingesetzt werden.

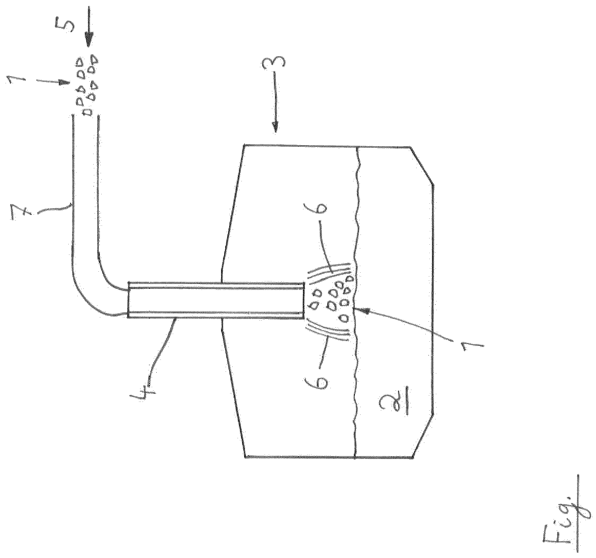

In der Zeichnung ist ein Ausführungsbeispiel der Erfindung dargestellt. Die einzige Figur zeigt schematisch einen Lichtbogenofen mit einer Hohlelektrode, durch die geschredderte Partikel in eine Schmelze eingeblasen werden.

In der Figur ist der Lichtbogenofen 3 skizziert, der als Gleichstromofen ausgeführt ist und eine (einzige) Hohlelektrode 4 aufweist. Wird in bekannter Weise eine Spannung zwischen dem Boden des Lichtbogenofens 3 und der Hohlelektrode 4 angelegt, entsteht ein Lichtbogen 6, der zum Aufschmelzen von Metall 2 dient.

Vor dem Einschalten des Lichtbogenofens 3 wurden (nicht dargestellte) Bauteile, die Kohlenstofffasern enthalten (d. h. CFK-haltige Bauteile) geschreddert, so dass Teile 1 entstanden sind. Diese werden bei eingeschaltetem Ofen 3 über eine Zuführleitung 7 unter Nutzung eines Trägergases 5 durch die Hohlelektrode 4 ins Innere des Lichtbogenofens 3 gefördert und gelangen hier zum Brennfleck im Ofen.

Konkret wird so vorgegangen:
Wenn der Schrott geschmolzen ist und die Schmelze ca. 1.500 °C erreicht hat, kann mit dem Einblasen begonnen werden. Die Eingabemenge an Material ist der eingebrachten Energiemenge so anzupassen, dass der Prozess stets im Bereich 1.400 °C +/- 100 °C verläuft. Durch das Einbringen des Kohlenstoffes kann die Temperatur etwas abgesenkt werden, weil auch die Erstarrungstemperatur sinkt.

Es können auch weitere Recyclingstoffe und sonstige Feinanteile den geschredderten Teilen mit CFK-Fasern zugemischt und mit ihnen eingeblasen werden.

Am Ende der Behandlung wird, wie üblich, die auf der Schmelze befindliche Schlacke entfernt. Anschließend werden aus der aufgekohlten Schmelze Recycling-Roheisenmasseln mit 3,00 % bis 3,50 % Kohlenstoff entweder über Sandbetten oder einer Masselgießmaschine hergestellt.

Beim Einblasen der Teile 1, bevorzugt in den Brennfleck der Elektrode(n), werden die Kohlenstofffasern geschmolzen, so dass der Kohlenstoff in die Schmelze gelangt. Dies erfolgt gegebenenfalls bis zum Sättigungsgrad des Eisens mit Kohlenstoff.

Die Verfahrenstechnik des Gleichstromofens bedingt, dass immer eine Restschmelze im Ofen verbleiben muss, um den Stromfluss zum Zünden des Lichtbogens zu ermöglichen.

Für die geschredderten Teile 1 kann ein Materialspeicher vorgesehen werden, aus dem die Einblasvorrichtung gespeist wird.

Bevorzugt kommt ein Gleichstromofen zum Einsatz, der eine Kapazität zwischen 8 und 15 t hat. Dieser Ofen benötigt lediglich eine einzige Hohlelektrode.

Der Ofen wird bevorzugt mit kleinstückigem Schrott gefüllt, um einen Flüssigsumpf zu erschmelzen. Dieser ist bei diesem Ofentyp durchgängig für den Stromdurchfluss notwendig, er darf also nie komplett entleert werden.

### Bezugszeichenliste:

- 1: Teile des Bauteils
- 2: Metall
- 3: Lichtbogenofen
- 4: Hohlelektrode
- 5: Trägergas
- 6: Lichtbogen
- 7: Zuführleitung

## Patentansprüche

1. Verfahren zum Verwerten von Bauteilen, die kohlenstofffaserverstärkten Kunststoff (CFK) aufweisen oder aus diesem bestehen,
**dadurch gekennzeichnet, dass**
das Verfahren die Schritte umfasst:
a) Zerteilen der Bauteile in Teile (1), insbesondere in geschredderte Partikel;
b) Aufschmelzen von Metall (2), insbesondere von unlegiertem Schrott, in einem Lichtbogenofen (3), wobei der Lichtbogenofen (3) mindestens eine als Hohlelektrode (4) ausgebildete Elektrode aufweist;
c) Zuführen der Teile (1) der Bauteile durch die mindestens eine Hohlelektrode (4) in den Lichtbogenofen (3), so dass die Teile (1) in die sich im Lichtbogenofen (3) befindliche Schmelze gelangen.

2. Verfahren nach Anspruch 1, **dadurch gekennzeichnet, dass** das Zerteilen der Bauteile in Teile gemäß Schritt a) und/oder das Zuführen der Teile (1) der Bauteile durch die Hohlelektrode (4) gemäß Schritt c) unter hermetischem Abschluss zur Umgebung erfolgt.

3. Verfahren nach Anspruch 1 oder 2, **dadurch gekennzeichnet, dass** das Zuführen der Teile (1) der Bauteile durch die Hohlelektrode (4) gemäß Schritt c) unter Einsatz eines Trägergases (5) erfolgt, welches durch die Hohlelektrode (4) geleitet wird.

4. Verfahren nach einem der Ansprüche 1 bis 3, **dadurch gekennzeichnet, dass** die Hohlelektrode (4) aus Graphit besteht.

5. Verfahren nach einem der Ansprüche 1 bis 4, **dadurch gekennzeichnet, dass** das Metall (2), welches gemäß Schritt b) aufgeschmolzen wird, Schrott ist, welcher zu Beginn des Verfahrens oder beim Einbringen in den Lichtbogenofen (3) einen maximalen Kohlenstoffanteil von 0,2 %, aufweist, wobei das Metall (2) insbesondere gescherter Besäumschrott aus der Coilproduktion ist.

6. Verfahren nach einem der Ansprüche 1 bis 5, **dadurch gekennzeichnet, dass** als Lichtbogenofen (3) ein Gleichstromlichtbogenofen vorzugsweise mit einer einzigen Hohlelektrode (4) verwendet wird.

7. Verfahren nach einem der Ansprüche 1 bis 6, **dadurch gekennzeichnet, dass** mit dem Zuführen der Teile (1) der Bauteile durch die mindestens eine Hohlelektrode (4) begonnen wird, sobald die Schmelze im Lichtbogenofen (3) eine Temperatur zwischen 1.470 °C und 1.530 °C hat.

8. Verfahren nach einem der Ansprüche 1 bis 7, **dadurch gekennzeichnet, dass** das Zuführen der Teile (1) der Bauteile durch die mindestens eine Hohlelektrode (4) und der Energieeintrag in den Lichtbogenofen (3) so erfolgen, dass im stationären Zustand die Schmelze eine Temperatur zwischen 1.300 °C und 1.500 °C hat.

9. Verfahren nach einem der Ansprüche 1 bis 8, **dadurch gekennzeichnet, dass** es beendet und das so erzeugte Recycling-Roheisen aus dem Lichtbogenofen (3) zumindest teilweise entnommen wird, sobald der Kohlenstoffgehalt in der Schmelze zwischen 2,5 % und 4,0 %, vorzugsweise zwischen 3,0 % und 3,5 %, beträgt.

10. Verfahren nach einem der Ansprüche 1 bis 9, **dadurch gekennzeichnet, dass** nach der Entnahme des erzeugten Recycling-Roheisens aus dem Lichtbogenofen (3) dieses zu Masseln verarbeitet wird.
